# EUROPEAN PATENT SPECIFICATION

(11) **EP 4 592 565 B1**
(45) Date of publication and mention of the grant of the patent: **18.11.2026**
(21) Application number: 24153776.0
(22) Date of filing: 24.01.2024
(51) Int. Cl.: F16H 21/20, F16C 3/28

(54) **TRANSMISSION WITH CRANK MECHANISM WITH ADJUSTABLE STROKE**
GETRIEBE MIT KURBELVORRICHTUNG MIT EINSTELLBAREM HUB
TRANSMISSION AVEC MÉCANISME À MANIVELLE À COURSE RÉGLABLE

(43) Date of publication of application: 30.07.2025
(73) Proprietor: Partena S.p.A., 40124 Bologna (IT)
(72) Inventor: SPAGGIARI, Paolo, 41012 CARPI MO (IT)
(74) Representative: Modiano, Micaela Nadia

(56) References cited:
- GB-A- 1 456 702
- SU-A1- 903 630
- US-A- 3 465 601

## Description

The present invention relates to an adjustable transmission for the transmission of a linear alternating motion.

The mechanical contrivance that is most widespread and most commonly used for generating a linear alternating motion is a link rod-crank mechanism, also known as a thrust crank mechanism.

Using a rotating driving shaft, rigidly associated with the crank, it is possible to generate a linear alternating motion by pivoting the free end of the crank to a first end face of a link rod, of which the second end face, opposite to the first one, is able to slide within a linear guide. Any component rendered integral with the second end face of the link rod will be moved in an alternating linear motion.

Since these are rigid mechanical components, it is not possible to adjust the extent of the oscillations (of the executed stroke) except by means of format change operations, which involve the substitution of components and/or their mounting in different configurations.

Every adjustment of the oscillation stroke therefore implies interrupting the operation of the entire machine inside which the transmission element is located, for sufficient time for the designated operator to perform the operations of substitution or reconfiguration of some components.

Furthermore it is essential that the activities of substitution and/or reconfiguration of the components be assigned to specialist operators in order to prevent the possibility of problems owing to an incorrect or imperfect assembly. The use of specialist labor implies greater management costs.

The use is known of devices configured to produce an alternating linear motion generated on strokes of variable extent, which use controlled motors that are made rotate in alternating directions through an angle of predefined breadth. Such technical solutions require very sophisticated controls (owing to the need to impart alternating rotations of adjustable angular extent) and have considerable problems of an inertial nature in that the motor, having to continuously change its direction of rotation, is heavily stressed. GB1456702 discloses such a transmission comprising an adjustable interconnection apparatus interposed between the motor output shaft and the crank.

Such new devices are therefore particularly expensive (in that they must include a controllable motor that can tolerate such an operating regime) and they are subject to frequent malfunctions, owing to the heavy stresses to which they are subjected.

The aim of the present invention is to solve the above-mentioned drawbacks, by providing an adjustable transmission in which the adjustment operations are rapid.

Within this aim, an object of the invention is to provide an adjustable transmission in which the adjustment operations are automatic.

Another object of the invention is to provide an adjustable transmission in which the adjustment operations can be performed without the need for specialist operators.

Another object of the invention is to provide an adjustable transmission which is particularly robust.

Another object of the invention is to provide an adjustable transmission which is not prone to malfunctions.

Another object of the present invention is to provide an adjustable transmission which is of low cost, easily and practically implemented and safely applied.

This aim and these and other objects which will become better apparent hereinafter are achieved by an adjustable transmission as defined in claim 1.

Further characteristics and advantages of the invention will become more apparent from the detailed description of a preferred, but not exclusive, embodiment of the adjustable transmission which is illustrated by way of non-limiting example in the accompanying drawings wherein:

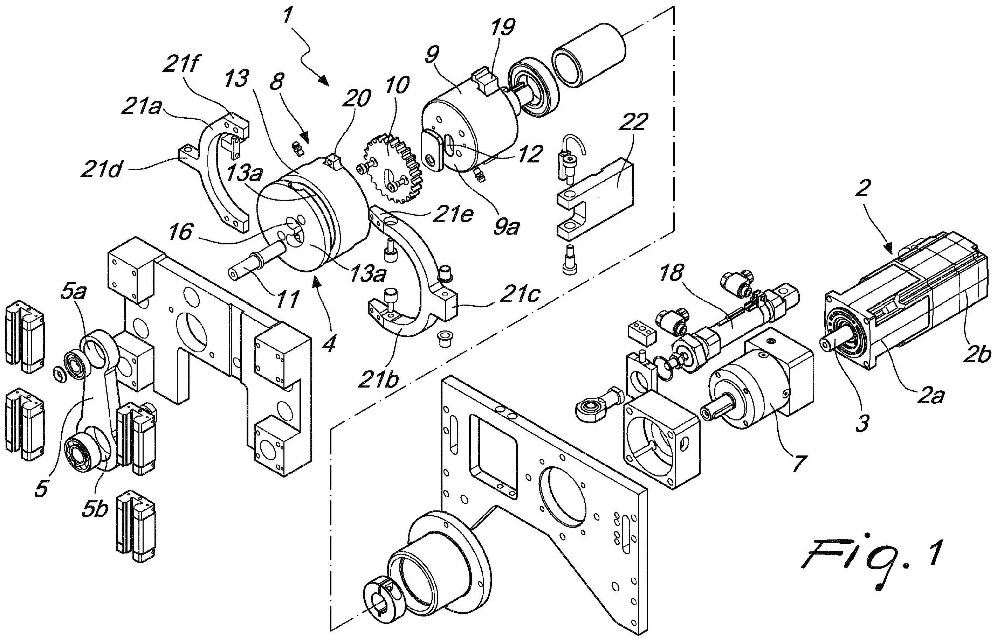

Figure 1 is a schematic exploded perspective view of a possible embodiment of an adjustable transmission according to the invention;

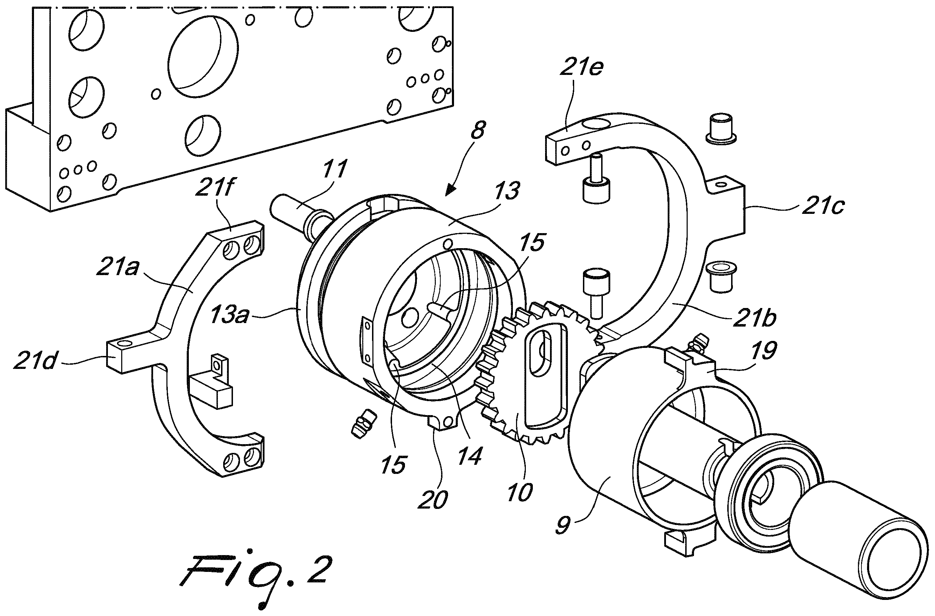

Figure 2 is a schematic exploded perspective view of a detail of the transmission of Figure 1;
Figure 3 is a schematic view from above of the transmission of Figure 1 in a first configuration of use;
Figure 4 is a schematic view from above of the transmission of Figure 1 in a second configuration of use;

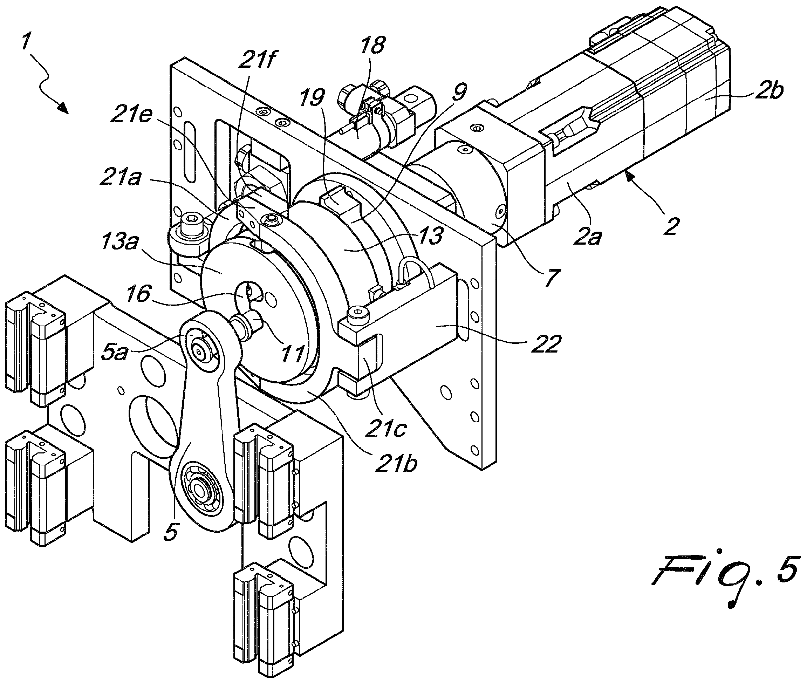

Figure 5 is a schematic perspective view of the transmission of Figure 1 set up to define a minimum stroke oscillation at the bottom dead center of the thrust crank mechanism;

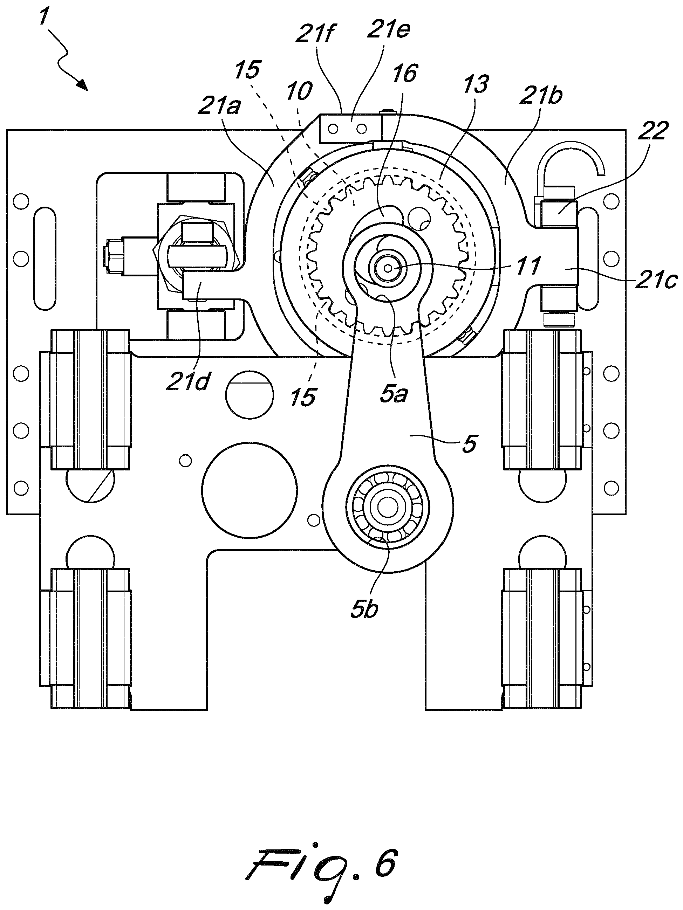

Figure 6 is a schematic front elevation view of the transmission in the arrangement of Figure 5;

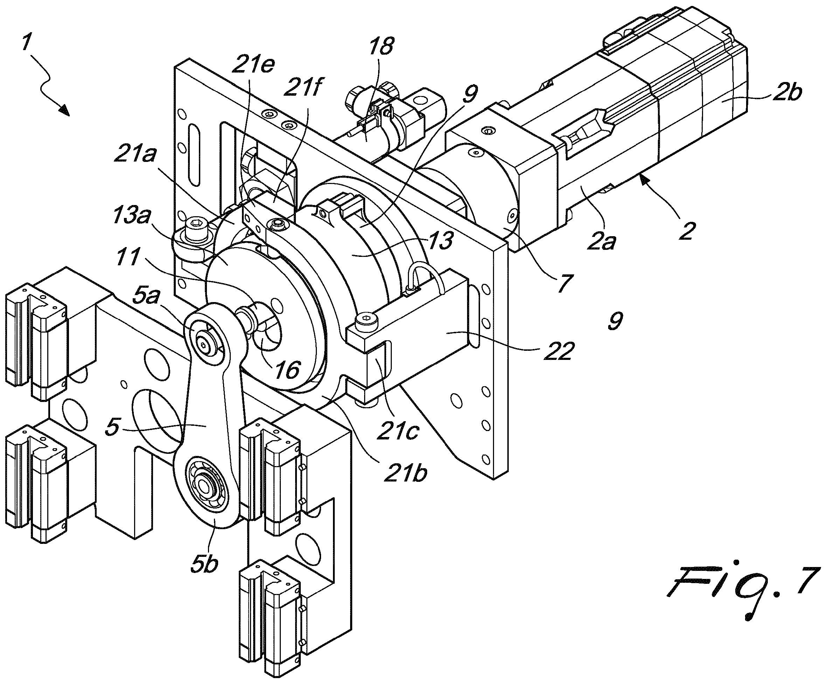

Figure 7 is a schematic perspective view of the transmission of Figure 1 set up to define a minimum stroke oscillation at the top dead center of the thrust crank mechanism;

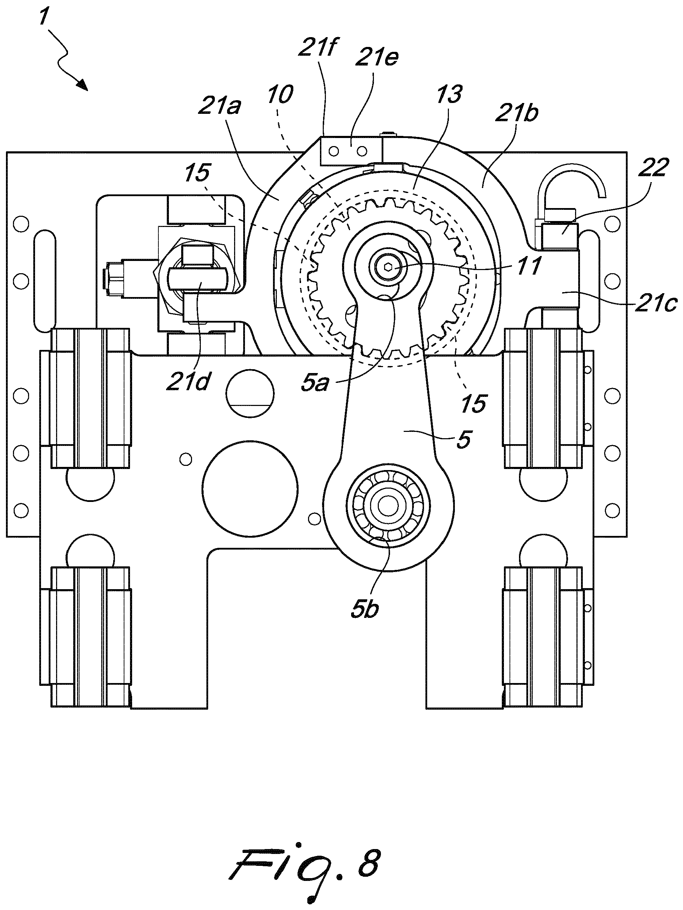

Figure 8 is a schematic front elevation view of the transmission in the arrangement of Figure 7;

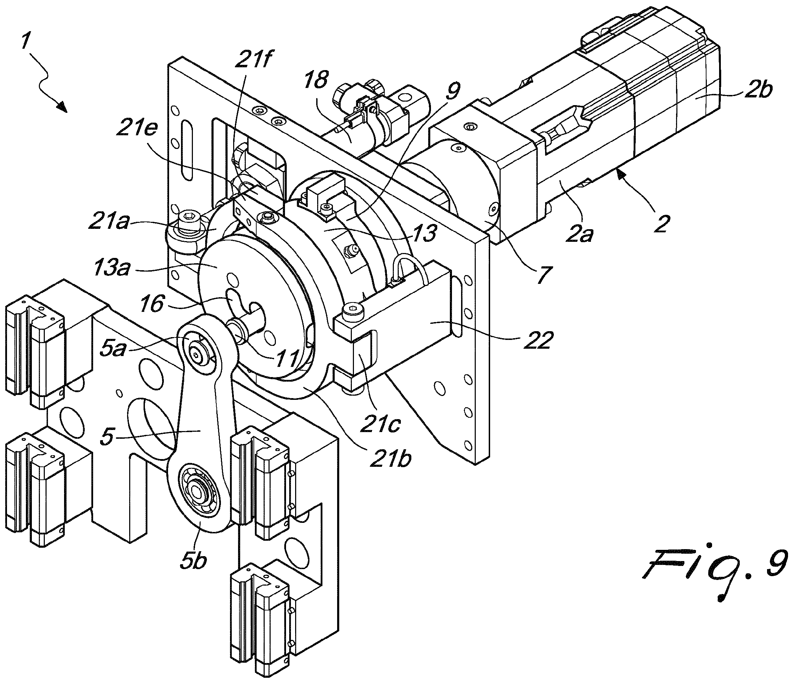

Figure 9 is a schematic perspective view of the transmission of Figure 1 set up to define an intermediate stroke oscillation at the bottom dead center of the thrust crank mechanism;

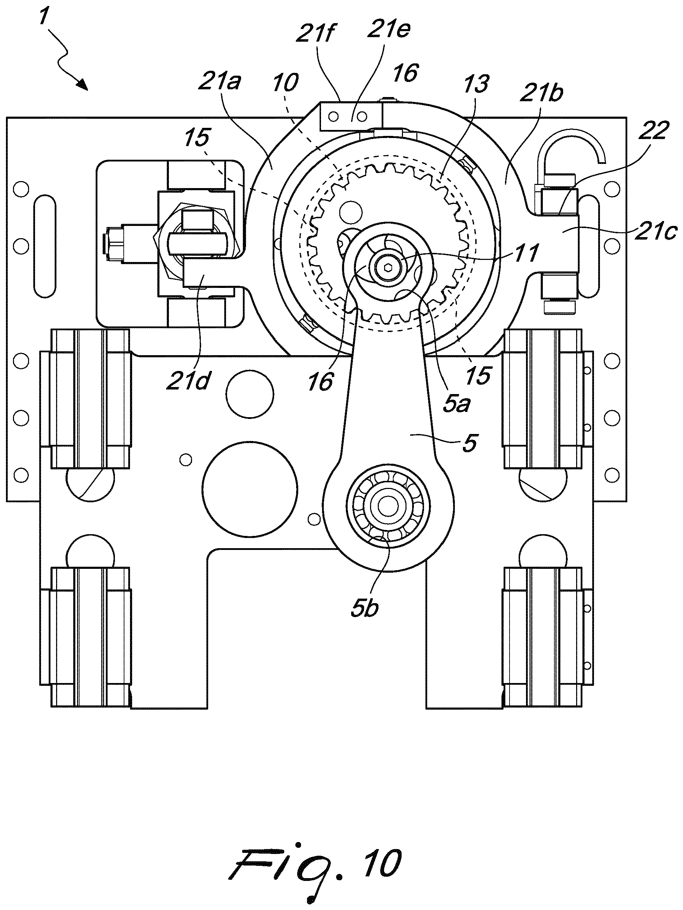

Figure 10 is a schematic front elevation view of the transmission in the arrangement of Figure 9;

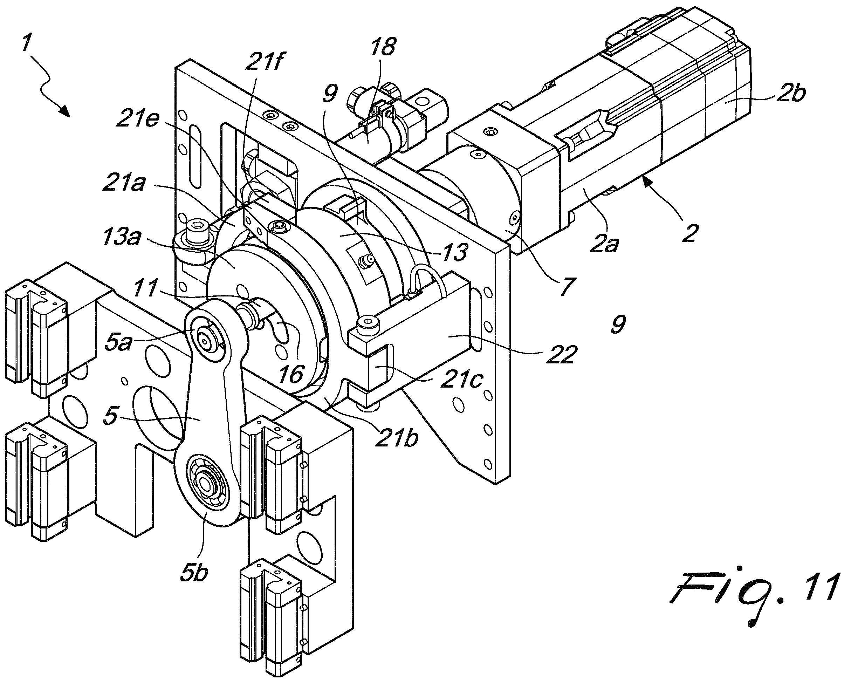

Figure 11 is a schematic perspective view of the transmission of Figure 1 set up to define an intermediate stroke oscillation at the top dead center of the thrust crank mechanism;

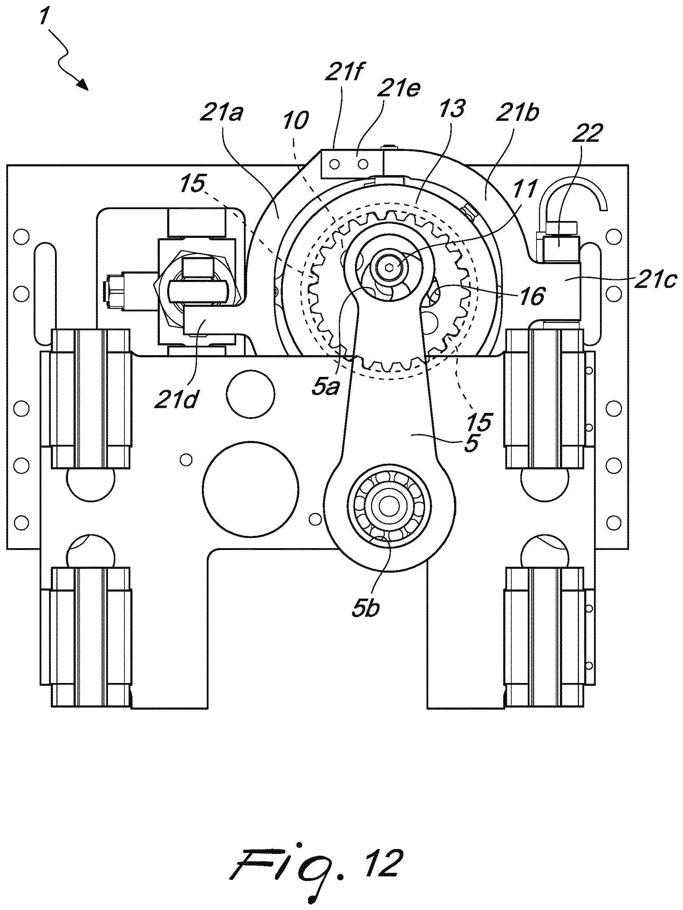

Figure 12 is a schematic front elevation view of the transmission in the arrangement of Figure 11;

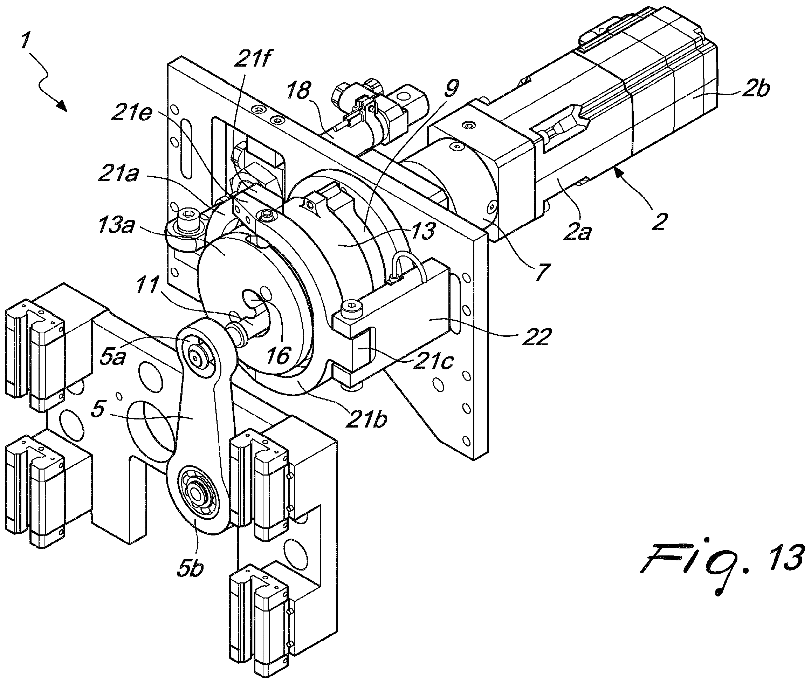

Figure 13 is a schematic perspective view of the transmission of Figure 1 set up to define a maximum stroke oscillation at the bottom dead center of the thrust crank mechanism;

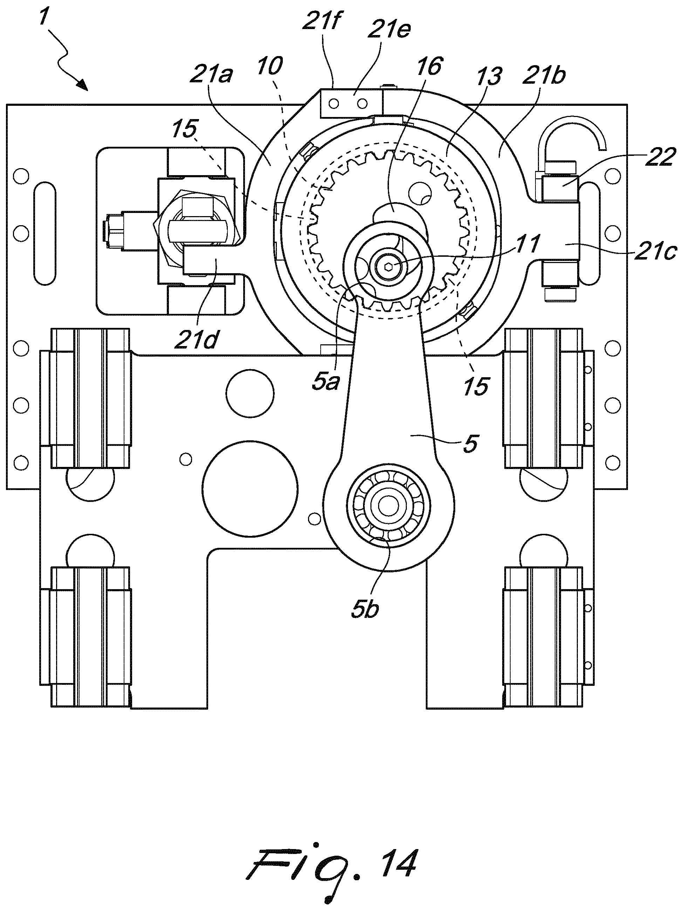

Figure 14 is a schematic front elevation view of the transmission in the arrangement of Figure 13;

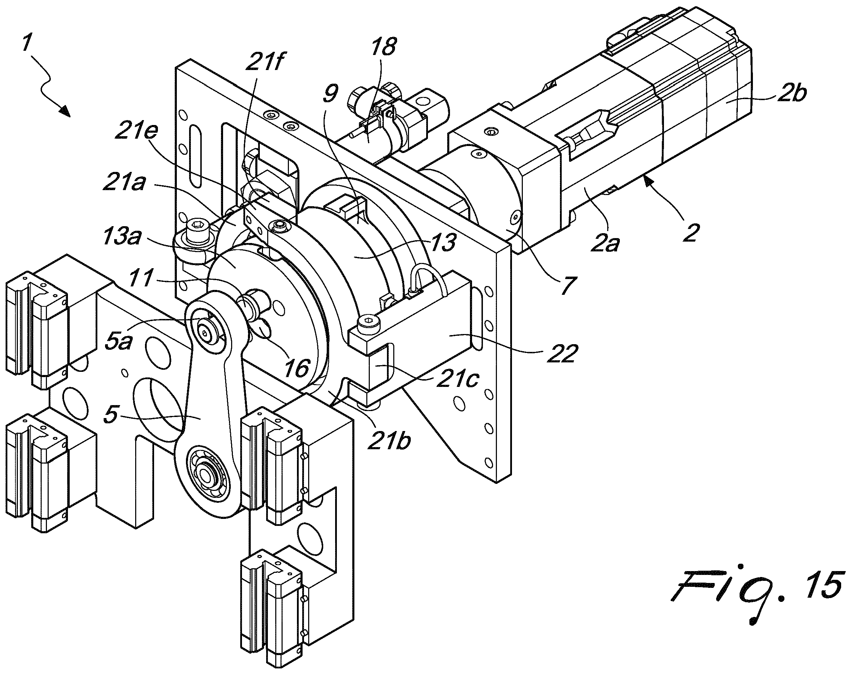

Figure 15 is a schematic perspective view of the transmission of Figure 1 set up to define a maximum stroke oscillation at the top dead center of the thrust crank mechanism;

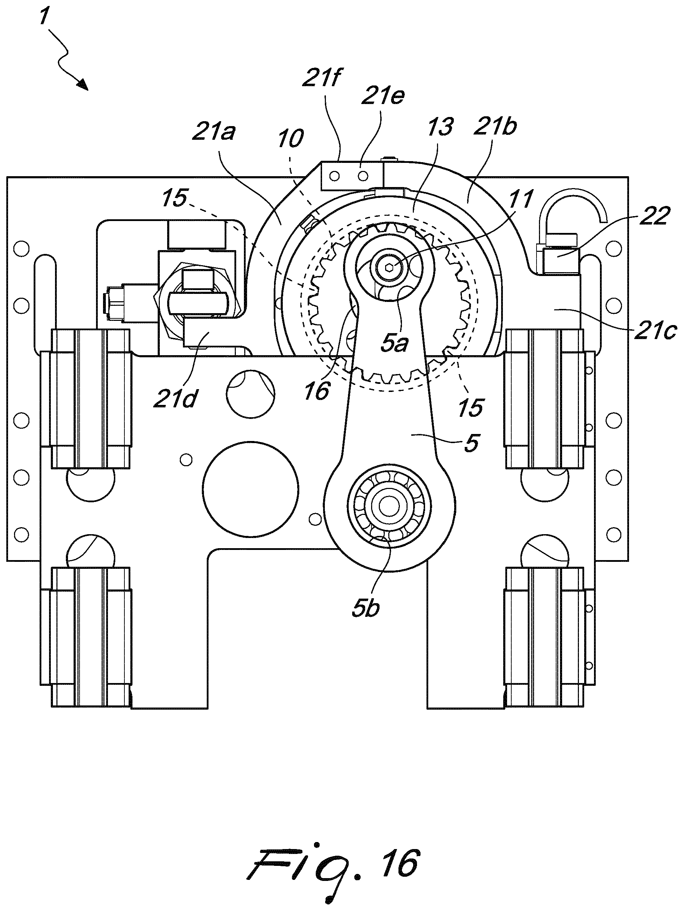

Figure 16 is a schematic front elevation view of the transmission in the arrangement of Figure 15;
Figure 17 is a schematic cross-sectional view from above, taken along a longitudinal plane passing through the axis of the electric motor, of the transmission of Figure 1 in a first configuration of use;
Figure 18 is a schematic cross-sectional view from above, taken along a longitudinal plane passing through the axis of the electric motor, of the transmission of Figure 1 in a second configuration of use.

With reference to the figures the reference numeral 1 generally designates an adjustable transmission according to the invention,

The adjustable transmission according to the invention is described in claim 1. It comprises a drive motor 2 provided with a rotating shaft 3 associated with a crank 4 which in turn is pivoted to a first end 5a of a link rod 5 which has a second end 5b which is pivoted to a sliding sled 6.

It should be noted that the motor 2 could also be associated with a speed reduction unit 7 (of known type): in such case it is possible for the motor 2 and the reducer 7 to be constituted by a single commercial component, i.e. a gear motor with the technical characteristics of interest for the correct operation of the transmission 1.

According to the invention, between the shaft 3 of the motor 2 (also with the interposition of reduction gears 7 and/or other components adapted for the transmission of the rotary motion of the motor 2) and the crank 4 an adjustable interconnection apparatus 8 is interposed.

Such interconnection apparatus 8 comprises a least one cylindrical body 9, integral with the shaft 3, provided with first coupling means 10 and with at least one protruding stem 11 which is parallel to the shaft 3 and can move along a stroke which is substantially radial with respect to an end face 9a of the at least one cylindrical body 9. In particular the first coupling means 10 can comprise a substantially radial groove 12 within which the protruding stem 11 can move.

The interconnection apparatus 8 further comprises at least one bell 13 with a cavity 14 with a shape substantially complementary to that of the at least one cylindrical body 9: such shape allows the at least partial accommodation of the cylindrical body 9 in the cavity 14 of the bell 13 under specific operating conditions.

The cavity 14 is further provided with second coupling means 15, complementary to the first coupling means 10, for the mechanical connection of the bell 13 to the cylindrical body 9 in a mutually coupled configuration.

The bell 13 comprises, in its end face 13a, a slot 16 which is substantially a spiral, regular or irregular, and is configured to accommodate the protruding stem 11.

The term "spiral" means that the slot 16 will substantially circle around the longitudinal axis of the element 1 (corresponding to the axis of rotation of the shaft 3 of the motor 2), progressively moving closer to or away from such longitudinal axis, in a regular or irregular manner, according to any form of locus i.e. curved, polygonal, or mixtilinear.

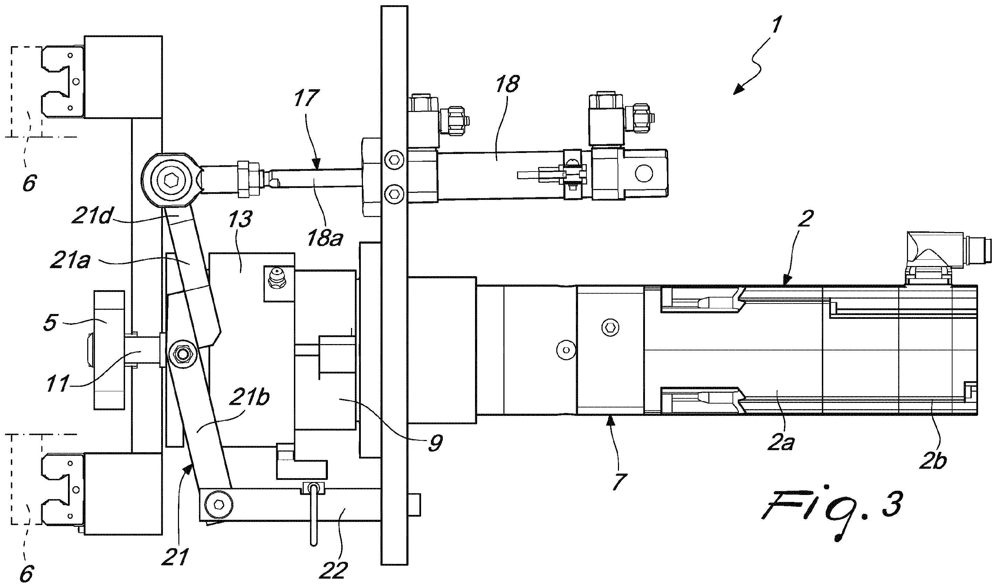

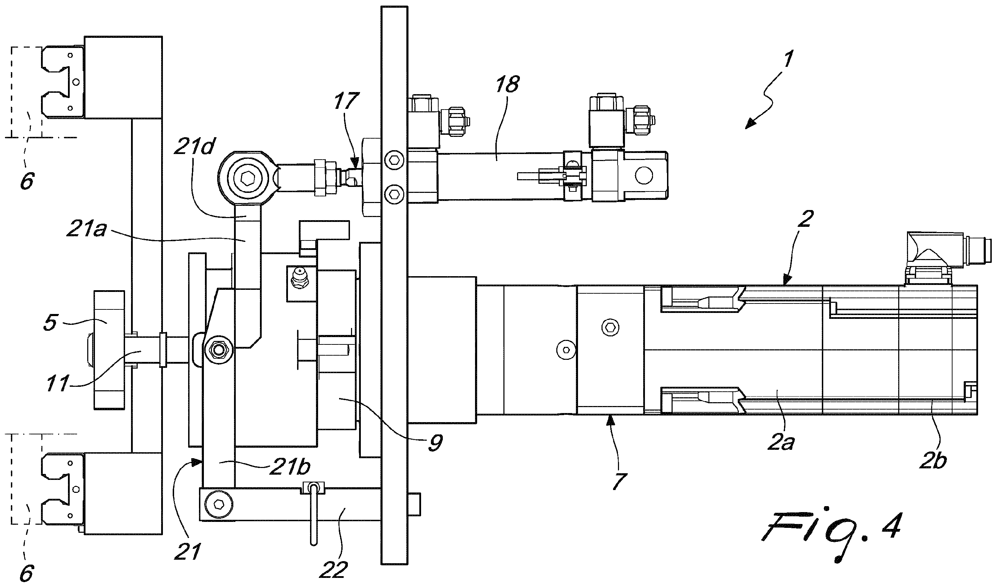

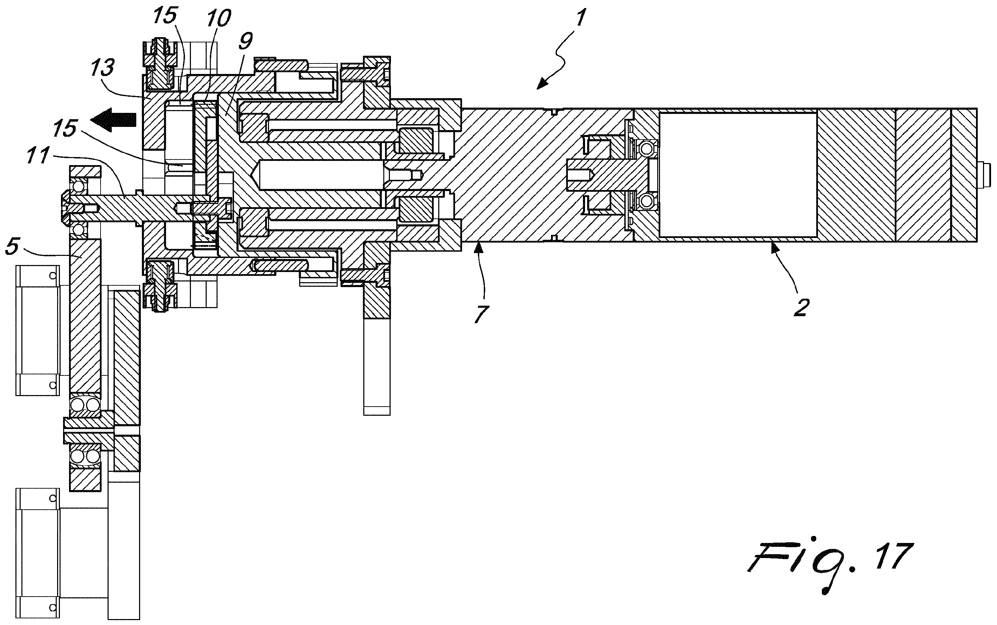

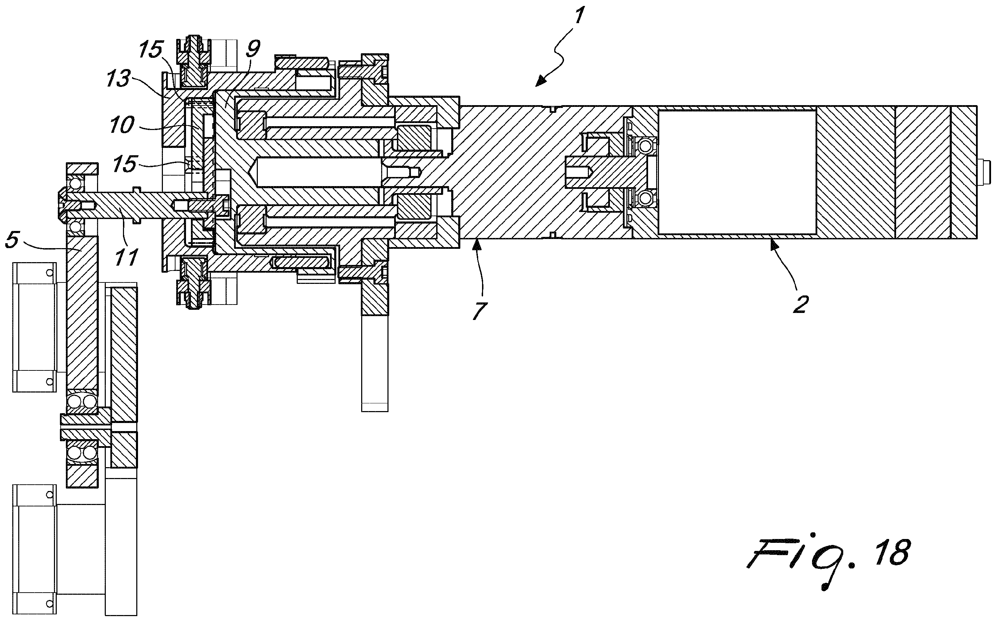

The interconnection apparatus 8 further comprises at least one actuator 17 configured for the translation of the at least one bell 13 between a first configuration (shown by way of non-limiting example in the accompanying Figures 3 and 17) of partial separation from the at least one cylindrical body 9, in which the first coupling means 10 and the second coupling means 15 are mutually facing, proximate, and not in mutual contact, and a second configuration (shown by way of non-limiting example in the accompanying Figures 4 and 18) of maximum proximity to the at least one cylindrical body 9, in which the first coupling means 10 and the second coupling means 15 are in mutual contact, rendering the cylindrical body 9 and the bell 13 integral.

With reference to a further embodiment it should be noted that the first 10 and the second 15 coupling means can conveniently be of a type chosen from mechanical toothings, grooved profiles, ribbed surfaces, surfaces coated with friction materials, lobed profiles, prismatic profiles and the like.

By means of the mutual coupling of the first coupling means 10 in the second coupling means 15 (and vice versa), it will be possible to rigidly connect the cylindrical body 9 and the bell 13, and therefore any pair of coupling means 10 and 15 that perform a shape coupling and/or a friction coupling will be suitable for the present application.

Similarly, with specific reference to embodiments of proven effectiveness, the at least one actuator 17 can profitably be of a type chosen from a pneumatic cylinder 18, a hydraulic cylinder, an endless screw assembly, a motor-rack assembly, a linear motor, a pusher, a magnetic handler and the like.

The drive motor 2 can also advantageously comprise an electric motor 2a (in the true sense of the term), of type preferably chosen from direct current motors, brushless motors, synchronous motors, asynchronous motors, stepper motors, salient pole motors and the like, and a control unit 2b configured to supply power to the electric motor 2a according to predefined logical sequences corresponding to specific laws of motion for the electric motor 2a.

The control unit 2b must be able to offer precise control of the rotation of the motor 2a, but, since in normal operation as a thrust crank mechanism the motor will in any case always need to rotate in the same direction (an alternating motion is not required as is necessary in the known art), such unit 2b will not need to drive the motor 2a under excessively strenuous conditions (to the advantage of the motor 2a, which will not be subjected to heavy inertial stresses and can be chosen of a smaller size than that envisaged in the known art).

It should be noted that the axis of the protruding stem 11 is arranged at a distance, in a radial direction with respect to the axis of the shaft of the electric motor 2a, that is adjustable as a function of the position of the stem 11 within the substantially spiral-shaped slot 16.

This distance defines the eccentricity of the crank 4 with respect to the axis of the shaft 3 and therefore modifies the stroke of the link rod 5 (in particular of its second end 5b pivoted on the sliding sled 6).

In the first configuration (shown by way of non-limiting example in Figures 3 and 17) of mutual decoupling of the first coupling means 10 and of the second coupling means 15, a predefined rotation of the cylindrical body 9 (integrally with the shaft 3 of the motor 2, therefore a rotation produced by the motor 2) will determine a displacement of the protruding stem 11 along the substantially spiral-shaped slot 16, with consequent variation of the distance of the axis of the protruding stem 11 with respect to the axis of the shaft 3 of the electric motor 2.

This rotation of the cylindrical body 2, while the element 1 is in the first configuration of decoupling, therefore produces a variation of the eccentricity of the axis of the protruding stem 11 with respect to the axis of the shaft 3 of the electric motor 2, therefore modifying the length of the crank 4 of the thrust crank mechanism, and therefore the stroke of the link rod 5 (in particular of its second end 5b pivoted on the sliding sled 6).

In the second configuration (shown by way of non-limiting example in Figures 4 and 18) of mutual coupling of the first coupling means 10 and of the second coupling means 15, every rotation of the cylindrical body 9 (produced by a rotation of the shaft 3 of the motor 2) determines an eccentric rotation, with respect to the axis of the shaft 3 of the electric motor 2, of the protruding stem 11, constituting the crank 4 of the thrust crank mechanism, with consequent entrainment of the link rod 5 and straight alternating oscillation of the sliding sled 6 (which is pivoted to the second end 5b of the link rod 5) along a stroke the extent of which depends on the eccentricity of the axis of the stem 11 with respect to the axis of the shaft 3 of the electric motor 2.

The cylindrical body 9 and the bell 13 can usefully comprise respective matched elements 19, 20: such elements 19, 20 are configured for respective mutual engagement when they are in the second configuration of coupling, in order to prevent any relative rotation between the body 9 and the bell 13.

It should further be noted that the transmission 1 according to the invention can positively comprise a bracket 21 which is integral with the bell 13 and coupled to the actuator 17.

With reference to the embodiment shown in the accompanying figures for the purposes of non-limiting example, the bracket 21 can be constituted by two half-brackets 21a and 21b which are shaped so as to embrace the bell 13, and can be pivoted thereto at respective diametrically mutually opposite portions.

A displacement of the movable organ (in the examples shown in the figures for the purposes of non-limiting example, the piston 18a of the pneumatic cylinder 18) of the actuator 17 will entrain the bracket 21, and the integral bell 13 with it, between the first configuration and the second configuration and vice versa.

More precisely, the bracket 21 (in particular the half-bracket 21b) can have a first end 21c pivoted to a fixed frame 22, and a second end 21d (part of the half-bracket 21b) pivoted to the movable organ (in the examples shown in the figures for the purposes of non-limiting example, the piston 18a of the pneumatic cylinder 18) of the actuator 17.

Respective portions which are substantially at the midpoint 21e and 21f of the bracket 21 (in particular, the portion 21e belongs to the half-bracket 21b and the portion 21f belongs to the half-bracket 21a) will be pivoted on lateral surfaces of the bell 13 (at diametrically opposite points 23 of a track 13a of the bell 13 itself) for the relative displacement from a first position corresponding to the first configuration (shown by way of non-limiting example in the accompanying Figures 3 and 17) to a second position corresponding to the second configuration (shown by way of non-limiting example in the accompanying Figures 4 and 18).

The half-brackets 21a and 21b are pivoted to the bell 13 within the annular track 13a, so as to allow, during the operation of the transmission 1 as a thrust crank mechanism, the free rotation of the bell 13 with respect to the bracket 21.

Basically the transmission 1 operates like a traditional thrust crank mechanism when it is in the second operating configuration described above.

If it is necessary to modify the extent of the alternating oscillation stroke of the sled 6, i.e. when it is necessary to vary the length of the crank 4, it is possible to interrupt the operation of the thrust crank mechanism (by pausing the operation of the motor 2) and bring the element 1 (in particular the bell 13 and the cylindrical body 9) to the first configuration, by shifting the movable organ of the actuator 17 (in the examples shown in the figures for the purposes of non-limiting example, the piston 18a of the pneumatic cylinder 18).

The bracket 21, in fact, will transfer the movement of the movable organ to the bell 13, moving it away from the cylindrical body 9 (with an arrangement shown by way of non-limiting example in the accompanying Figures 3 and 17). The coupling means 10 and 15 will no longer be mutually interconnected and therefore the cylindrical body 9 will be able to rotate freely with respect to the bell 13.

The relative rotation (executed by small rotation angles following a suitable controlled command of the position of the motor 2) will produce a relative movement of the cylindrical body 9 with respect to the bell 13 and therefore a displacement of the protruding stem 11 (varying the eccentricity of the axis of the stem 11 with respect to the axis of the shaft 3). In fact the stem 11 can move inside the slot 16 with a substantially spiral progression on the bell 13, but it can also move inside the groove 12 of the first coupling means 10. A relative rotation of the cylinder 9 with respect to the bell 13 therefore entails a displacement in a radial direction of the protruding stem 11 (as a compound of the strokes permitted by the groove 12 and by the slot 16) so modifying its eccentricity.

At this point, once the correct eccentricity of the crank 4 is defined, which will define the appropriate stroke of the sled 6 (entrained by the link rod 5), it will be possible to impose the retraction of the movable organ of the actuator 17, so returning the bell 13 into abutment against the cylindrical body 9 (with consequent mutual engagement of the coupling means 10 and 15), and so making the transmission 1 assume the second configuration once again (shown by way of non-limiting example in the accompanying Figures 4 and 18) in which it can operate like a thrust crank mechanism.

Advantageously the present invention solves the above-mentioned problems, by providing an adjustable transmission in which the adjustment operations are rapid.

Conveniently, in the transmission 1 according to the invention the adjustment operations are automatic.

The adjustment operations of the transmission 1 according to the invention can be profitably performed without the need for specialist operators.

Advantageously the transmission 1 according to the invention is particularly robust.

Positively the transmission 1 according to the invention is not prone to malfunctions.

Positively the transmission 1 according to the invention is easily and practically implemented and is of low cost: such characteristics make the transmission according to the invention an innovation that is safe in use.

The invention thus conceived is susceptible of numerous 12 modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. An adjustable transmission comprising a drive motor (2) provided with a rotating shaft (3) associated with a crank (4) which in turn is pivoted to a first end (5a) of a link rod (5) which has a second end (5b) which is pivoted to a sliding sled (6) wherein an adjustable interconnection apparatus (8) is interposed between said shaft (3) of said motor (2) and said crank (4), **characterized in that** the adjustable transmission comprises:
- at least one cylindrical body (9), integral with said shaft (3), provided with first coupling means (10) and with at least one protruding stem (11) which is parallel to said shaft (3) and can move along a stroke which is substantially radial with respect to an end face (9a) of said at least one cylindrical body (9);
- at least one bell (13) provided with a cavity (14) with a shape substantially complementary to that of said at least one cylindrical body (9), for its accommodation, and with second coupling means (15), complementary to said first coupling means (10), for the mechanical connection of said bell (13) to said cylindrical body (9) in a mutually coupled configuration, said bell (13) comprising a slot (16) in its end face which is substantially a spiral, regular or irregular, and is configured to accommodate said protruding stem (11);
- at least one actuator (17) configured for the translation of said at least one bell (13) between a first configuration of partial separation from said at least one cylindrical body (10), in which said first coupling means (10) and said second coupling means (15) are mutually facing, proximate, and not in mutual contact, and a second configuration of maximum proximity to said at least one cylindrical body (9), in which said first coupling means (10) and said second coupling means (15) are in mutual contact, rendering said cylindrical body (9) and said bell (13) integral.

2. The adjustable transmission according to claim 1, **characterized in that** said first (10) and second coupling means (15) are of a type chosen from mechanical toothings, grooved profiles, ribbed surfaces, surfaces coated with friction materials, lobed profiles, prismatic profiles and the like.

3. The adjustable transmission according to one or more of the preceding claims, **characterized in that** said at least one actuator (17) is of a type chosen from a pneumatic cylinder (18), a hydraulic cylinder, an endless screw assembly, a motor-rack assembly, a linear motor, a pusher, a magnetic handler and the like.

4. The adjustable transmission according to one or more of the preceding claims, **characterized in that** said drive motor (2) comprises:
- an electric motor (2a), of type preferably chosen from direct current motors, brushless motors, synchronous motors, asynchronous motors, stepper motors, salient pole motors and the like,
- a control unit (2b) configured to supply power to said electric motor (2a) according to predefined logical sequences corresponding to specific laws of motion for said electric motor (2a).

5. The adjustable transmission according to one or more of the preceding claims, **characterized in that** the axis of said protruding stem (11) is arranged at a distance, in a radial direction with respect to the axis of said shaft of the electric motor (2), that is adjustable as a function of the position of said stem (11) within said substantially spiral-shaped slot (16).

6. The adjustable transmission according to claim 5, **characterized in that** in said first configuration of mutual decoupling of said first (10) and said second (15) coupling means, a predefined rotation of said cylindrical body (9) determines a displacement of said protruding stem (11) along said substantially spiral-shaped slot (16), with consequent variation of the distance between said axis of said protruding stem (11) and the axis of said shaft (3) of the electric motor (2), i.e. a variation of the eccentricity of said axis of said protruding stem (11) with respect to the axis of said shaft (3) of said electric motor (2).

7. The adjustable transmission according to claim 5, **characterized in that** in said second configuration of mutual coupling of said first (10) and said second (15) coupling means, every rotation of said cylindrical body (9) determines an eccentric rotation, with respect to the axis of the shaft (3) of said electric motor (2), of said protruding stem (11), constituting the crank (4), with consequent entrainment of said link rod (5) and straight alternating oscillation of said sliding sled (6) along a stroke the extent of which depends on the eccentricity of said axis of said stem (11) with respect to the axis of said shaft (3) of said electric motor (2).

8. The adjustable transmission according to one or more of the preceding claims, **characterized in that** said cylindrical body (9) and said bell (13) comprise respective matched elements (19, 20) which are configured for respective mutual engagement when they are in said second configuration of coupling.

9. The adjustable transmission according to one or more of the preceding claims, **characterized in that** it comprises a bracket (21) which is integral with said bell (13) and is coupled to said actuator (17), a displacement of the movable organ of said actuator (17) entraining said bracket (21) and said bell (13) between said first configuration and said second configuration and vice versa.

10. The adjustable transmission according to claim 9 **characterized in that** said bracket (21) has a first end (21c) which is pivoted to a fixed frame (22) and a second end (21d) which is pivoted to the movable organ of said actuator (17), respective portions (21e, 21f) which are substantially at the midpoint of said bracket (21) being pivoted to lateral surfaces of said bell (13) for the relative displacement from a first position corresponding to said first configuration to a second position corresponding to said second configuration.

## Patentansprüche

1. Ein einstellbares Getriebe, das einen Antriebsmotor (2) umfasst, ausgestattet mit einer sich drehenden Welle (3), die verbunden ist mit einer Kurbel (4), welche wiederum drehgelenkig mit einem ersten Ende (5a) einer Gelenkstange (5) verbunden ist, die ein zweites Ende (5b) hat, welches drehgelenkig mit einem Gleitschlitten (6) verbunden ist, wobei eine verstellbare Verbindungsvorrichtung (8) zwischen der Welle (3) des Motors (2) und der Kurbel (4) angeordnet ist; **dadurch gekennzeichnet, dass** das einstellbare Getriebe Folgendes umfasst:
- mindestens einen zylindrischen Körper (9), integral mit der Welle (3), ausgestattet mit ersten Kopplungsmitteln (10) und mit mindestens einem vorstehenden Schaft (11), der parallel zu der Welle (3) ist und sich entlang einem Hub bewegen kann, der im Wesentlichen radial mit Bezug auf eine Stirnseite (9a) des mindestens einen zylindrischen Körpers (9) ist;
- mindestens eine Glocke (13), ausgestattet mit einem Hohlraum (14) mit einer Form, die im Wesentlichen komplementär zu derjenigen des mindestens einen zylindrischen Körpers (9) ist, zum Zwecke seiner Aufnahme, und mit zweiten Kopplungsmitteln (15), komplementär zu den ersten Kopplungsmitteln (10), zur mechanischen Verbindung der Glocke (13) mit dem zylindrischen Körper (9) in miteinander gekoppelter Anordnung; wobei die Glocke (13) einen Schlitz (16) in ihrer Stirnseite umfasst, der im Wesentlichen eine regelmäßige oder unregelmäßige Spirale ist und ausgebildet ist, um den vorstehenden Schaft (11) aufzunehmen;
- mindestens ein Antriebselement (17), ausgebildet für die Translationsbewegung der mindestens einen Glocke (13) zwischen einer ersten Anordnung partieller Trennung von dem mindestens einen zylindrischen Körper (10), wobei die ersten Kopplungsmittel (10) und die zweiten Kopplungsmittel (15) einander zugewandt sind, einander benachbart sind und nicht im Kontakt miteinander stehen, und einer zweiten Anordnung maximaler Nähe zu dem mindestens einen zylindrischen Körper (9), worin die ersten Kopplungsmittel (10) und die zweiten Kopplungsmittel (15) in Kontakt miteinander stehen und den zylindrischen Körper (9) und die Glocke (13) integral machen.

2. Das einstellbare Getriebe gemäß Anspruch 1, **dadurch gekennzeichnet, dass** die ersten (10) und die zweiten Kopplungsmittel (15) von einer Art sind, die gewählt ist aus mechanischen Verzahnungen, Rillenprofilen, gerippten Oberflächen, Oberflächen, die mit Reibungsmaterialien beschichtet sind, gelappten Profilen, prismenförmigen Profilen und dergleichen.

3. Das einstellbare Getriebe gemäß einem oder mehreren der obigen Ansprüche, **dadurch gekennzeichnet, dass** das mindestens eine Antriebselement (17) von einer Art ist, die gewählt ist aus einem Pneumatikzylinder (18), einem Hydraulikzylinder, einem Schneckenaufbau, einem Motor-Zahnstangen-Aufbau, einem Linearmotor, einem Schieber, einem magnetischen Handler und dergleichen.

4. Das einstellbare Getriebe gemäß einem oder mehreren der obigen Ansprüche, **dadurch gekennzeichnet, dass** der Antriebsmotor (2) Folgendes umfasst:
- einen Elektromotor (2a) von einer Art, die vorzugsweise gewählt ist aus Gleichstrommotoren, bürstenlosen Motoren, Synchronmotoren, Asynchronmotoren, Schrittmotoren, Schenkelpolmotoren und dergleichen,
- eine Steuereinheit (2b), ausgebildet, um dem Elektromotor (2a) gemäß vordefinierten logischen Abfolgen, die bestimmten Bewegungsgesetzen für den Elektromotor (2a) entsprechen, Strom zuzuführen.

5. Das einstellbare Getriebe gemäß einem oder mehreren der obigen Ansprüche, **dadurch gekennzeichnet, dass** die Achse des vorstehenden Schafts (11) in einem Abstand, in radialer Richtung bezogen auf die Achse der Welle des Elektromotors (2), angeordnet ist, der in Abhängigkeit von der Position des Schafts (11) in dem im Wesentlichen spiralförmigen Schlitz (16) verstellbar ist.

6. Das einstellbare Getriebe gemäß Anspruch 5, **dadurch gekennzeichnet, dass** in der ersten Anordnung der Entkopplung der ersten (10) und der zweiten (15) Kopplungsmittel voneinander eine vordefinierte Drehung des zylindrischen Körpers (9) eine Verschiebung des vorstehenden Schafts (11) entlang dem im Wesentlichen spiralförmigen Schlitz (16) auslöst, mit daraus folgender Veränderung des Abstands zwischen der Achse des vorstehenden Schafts (11) und der Achse der Welle (3) des Elektromotors (2), d. h. einer Veränderung der Exzentrizität der Achse des vorstehenden Schafts (11) mit Bezug auf die Achse der Welle (3) des Elektromotors (2).

7. Das einstellbare Getriebe gemäß Anspruch 5, **dadurch gekennzeichnet, dass** in der zweiten Anordnung der Kopplung der ersten (10) und der zweiten (15) Kopplungsmittel miteinander jede Drehung des zylindrischen Körpers (9) eine exzentrische Drehung des vorstehenden Schafts (11), der die Kurbel (4) bildet, mit Bezug auf die Achse der Welle (3) des Elektromotors (2) auslöst, mit daraus folgender Mitnahme der Gelenkstange (5) und gerader alternierender Oszillation des Gleitschlittens (6) entlang einem Hub auslöst, dessen Länge von der Exzentrizität der Achse des Schafts (11) mit Bezug auf die Achse der Welle (3) des Elektromotors (2) abhängt.

8. Das einstellbare Getriebe gemäß einem oder mehreren der obigen Ansprüche, **dadurch gekennzeichnet, dass** der zylindrische Körper (9) und die Glocke (13) entsprechende passende Elemente (19, 20) umfassen, die für entsprechenden Eingriff ineinander ausgebildet sind, wenn sie sich in der zweiten Kopplungsanordnung befinden.

9. Das einstellbare Getriebe gemäß einem oder mehreren der obigen Ansprüche, **dadurch gekennzeichnet, dass** es eine Klammer (21) umfasst, die mit der Glocke (13) integral und mit dem Antriebselement (17) gekoppelt ist, wobei eine Verschiebung des beweglichen Elements des Antriebselements (17) die Klammer (21) und die Glocke (13) zwischen der ersten Anordnung und der zweiten Anordnung bewegt und umgekehrt.

10. Das einstellbare Getriebe gemäß Anspruch 9, **dadurch gekennzeichnet, dass** die Klammer (21) ein erstes Ende (21c) hat, das gelenkig mit einem festen Rahmen (22) verbunden ist, und ein zweites Ende (21d), das gelenkig mit dem beweglichen Element des Antriebselements (17) verbunden ist; wobei entsprechende Abschnitte (21e, 21f), die sich im Wesentlichen im Mittelpunkt der Klammer (21) befinden, gelenkig mit Seitenflächen der Glocke (13) verbunden sind, zum Zwecke der Relativverschiebung aus einer ersten Position, die der ersten Anordnung entspricht, in eine zweite Position, die der zweiten Anordnung entspricht.

## Revendications

1. Transmission réglable comprenant un moteur d'entraînement (2) muni d'un arbre rotatif (3) associé à une manivelle (4) qui, à son tour, est articulée à une première extrémité (5a) d'une bielle (5) qui a une seconde extrémité (5b) articulée à une glissière (6), où un dispositif d'interconnexion réglable (8) est intercalé entre ledit arbre (3) dudit moteur (2) et ladite manivelle (4), **caractérisée en ce que** la transmission réglable comprend :
- au moins un corps cylindrique (9), solidaire dudit arbre (3), muni de premiers moyens d'accouplement (10) et d'au moins une tige en saillie (11) qui est parallèle audit arbre (3) et peut se déplacer selon une course qui est sensiblement radiale par rapport à une face d'extrémité (9a) dudit au moins un corps cylindrique (9) ;
- au moins une cloche (13) pourvue d'une cavité (14) dont la forme est sensiblement complémentaire de celle dudit au moins un corps cylindrique (9), pour son logement, et de seconds moyens d'accouplement (15), complémentaires auxdits premiers moyens d'accouplement (10), pour la connexion mécanique de ladite cloche (13) audit corps cylindrique (9) dans une configuration d'accouplement mutuel, ladite cloche (13) comportant, dans sa face d'extrémité, une fente (16) qui est sensiblement en spirale, régulière ou irrégulière, et qui est configurée pour recevoir ladite tige saillante (11) ;
- au moins un actionneur (17) conçu pour assurer la translation de ladite au moins une cloche (13) entre une première configuration de séparation partielle par rapport à ledit au moins un corps cylindrique (10), dans laquelle lesdits premiers moyens d'accouplement (10) et lesdits deuxièmes moyens d'accouplement (15) sont mutuellement en regard, proches, et sans contact mutuel, et une deuxième configuration de proximité maximale par rapport audit au moins un corps cylindrique (9), dans laquelle lesdits premiers moyens d'accouplement (10) et lesdits deuxièmes moyens d'accouplement (15) sont en contact mutuel, rendant ainsi ledit corps cylindrique (9) et ladite cloche (13) solidaires.

2. Transmission réglable selon la revendication 1, **caractérisée en ce que** lesdits premiers (10) et deuxièmes moyens d'accouplement (15) sont d'un type choisi parmi dentures mécaniques, profils rainurés, surfaces nervurées, surfaces revêtues de matériaux de friction, profils lobés, profils prismatiques et similaires.

3. Transmission réglable selon l'une ou plusieurs des revendications précédentes, **caractérisée en ce que** ledit au moins un actionneur (17) est d'un type choisi parmi un vérin pneumatique (18), un vérin hydraulique, un ensemble à vis sans fin, un ensemble moteur-crémaillère, un moteur linéaire, un poussoir, un manipulateur magnétique et similaires.

4. Transmission réglable selon une ou plusieurs des revendications précédentes, **caractérisée en ce que** ledit moteur d'entraînement (2) comprend :
- un moteur électrique (2a), de type choisi de préférence parmi les moteurs à courant continu, les moteurs sans balais, les moteurs synchrones, les moteurs asynchrones, les moteurs pas à pas, les moteurs à pôles saillants et similaires,
- une unité de commande (2b) configurée pour alimenter ledit moteur électrique (2a) selon des séquences logiques prédéfinies correspondant à des lois de mouvement spécifiques pour ledit moteur électrique (2a) .

5. Transmission réglable selon l'une ou plusieurs des revendications précédentes, **caractérisée en ce que** l'axe de ladite tige saillante (11) est disposé à une distance, dans une direction radiale par rapport à l'axe dudit arbre du moteur électrique (2), qui est réglable en fonction de la position de ladite tige (11) à l'intérieur de ladite fente sensiblement en forme de spirale (16).

6. Transmission réglable selon la revendication 5, **caractérisée en ce que**, dans ladite première configuration de découplage mutuel desdits premiers (10) et seconds (15) moyens d'accouplement, une rotation prédéfinie dudit corps cylindrique (9) détermine un déplacement de ladite tige saillante (11) le long de ladite fente sensiblement en forme de spirale (16), avec pour conséquence une variation de la distance entre ledit axe de ladite tige saillante (11) et l'axe dudit arbre (3) du moteur électrique (2), c'est-à-dire une variation de l'excentricité dudit axe de ladite tige saillante (11) par rapport à l'axe dudit arbre (3) dudit moteur électrique (2) .

7. Transmission réglable selon la revendication 5, **caractérisée en ce que**, dans ladite deuxième configuration de couplage mutuel entre lesdits premiers (10) et lesdits deuxièmes (15) moyens de couplage, chaque rotation dudit corps cylindrique (9) détermine une rotation excentrique, par rapport à l'axe de l'arbre (3) dudit moteur électrique (2), de ladite tige saillante (11), constituant la manivelle (4), entraînant par conséquent ladite bielle (5) et une oscillation alternative rectiligne de ladite glissière (6) le long d'une course dont l'amplitude dépend de l'excentricité dudit axe de ladite tige (11) par rapport à l'axe dudit arbre (3) dudit moteur électrique (2).

8. Transmission réglable selon l'une ou plusieurs des revendications précédentes, **caractérisée en ce que** ledit corps cylindrique (9) et ladite cloche (13) comprennent des éléments correspondants respectifs (19, 20) qui sont configurés pour s'engager mutuellement lorsqu'ils se trouvent dans ladite deuxième configuration d'accouplement.

9. Transmission réglable selon une ou plusieurs des revendications précédentes, **caractérisée en ce qu'**elle comprend un support (21) qui est d'un seul tenant avec ladite cloche (13) et qui est couplé audit actionneur (17), un déplacement de l'organe mobile dudit actionneur (17) entraînant ledit support (21) et ladite cloche (13) entre ladite première configuration et ladite seconde configuration et vice versa.

10. Transmission réglable selon la revendication 9, **caractérisée en ce que** ledit support (21) présente une première extrémité (21c) qui est articulée sur un châssis fixe (22) et une seconde extrémité (21d) qui est articulée sur l'organe mobile dudit actionneur (17), des parties respectives (21e, 21f) situées sensiblement au milieu dudit support (21) étant articulées sur les faces latérales de ladite cloche (13) pour permettre le déplacement relatif depuis une première position correspondant à ladite première configuration vers une deuxième position correspondant à ladite deuxième configuration.
